# EUROPEAN PATENT APPLICATION

(11) **EP 2 134 043 A1**
(43) Date of publication of application: **16.12.2009**
(21) Application number: 07713580.4
(22) Date of filing: 09.03.2007
(51) Int. Cl.: H04L 12/66

(54) **RELAY DEVICE, ITS CONTROL METHOD, INTER-ATM COMMUNICATION SUPPORT SYSTEM, AND COMPUTER PROGRAM**

(71) Applicant: Fujitsu Limited, Kawasaki-shi, Kanagawa 211-8588 (JP)
(72) Inventor: TATSUMI, Kouji, Osaka-shi Osaka 540-0001 (JP); INOUE, Toshihiko, Osaka-shi Osaka 540-0001 (JP); MASUHARA, Hayato, Osaka-shi Osaka 540-0001 (JP); SHIMAZAKI, Kazuhisa, Osaka-shi Osaka 540-0001 (JP); UCHIMOTO, Norihisa, Osaka-shi Osaka 540-0001 (JP); YAMADA, Kouichiro, Osaka-shi Osaka 540-0001 (JP)
(74) Representative: HOFFMANN EITLE
(86) International application number: PCT/JP2007/000198
(87) International publication number: WO 2008/111117

(57) **Abstract**

An ATM-ETHERNET converter (21B) is provided for relaying ATM cells (70) transmitted from a CLAD (22) of an ATM network (2B) to a CLAD (22) of an ATM network (2A) via a wide area Ethernet (3). The ATM-ETHERNET converter (21B) is provided with an ATM-PHY (212) receiving the ATM cells (70) transmitted from the CLAD (22) of the ATM network (2B), a buffer (41) storing the ATM cells (70) thus received, a LAN switch (214) that encapsulates the ATM cells (70) stored in the buffer (41) in a frame (FRD) corresponding to the wide area Ethernet (3) and sends the ATM cells (70) to the wide area Ethernet (3), and a CPU (211) starting discarding the ATM cells (70) stored in the buffer (41) at a predetermined time.

## Description

### TECHNICAL FIELD

The present invention relates to a device, a method, and the like for connecting a plurality of ATM networks via Ethernet (registered trademark).

### BACKGROUND ART

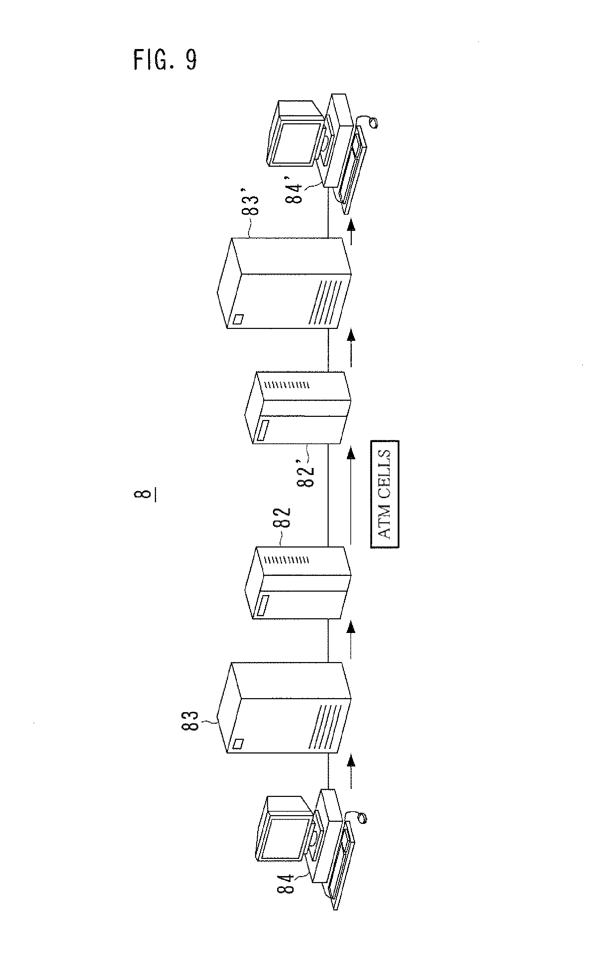

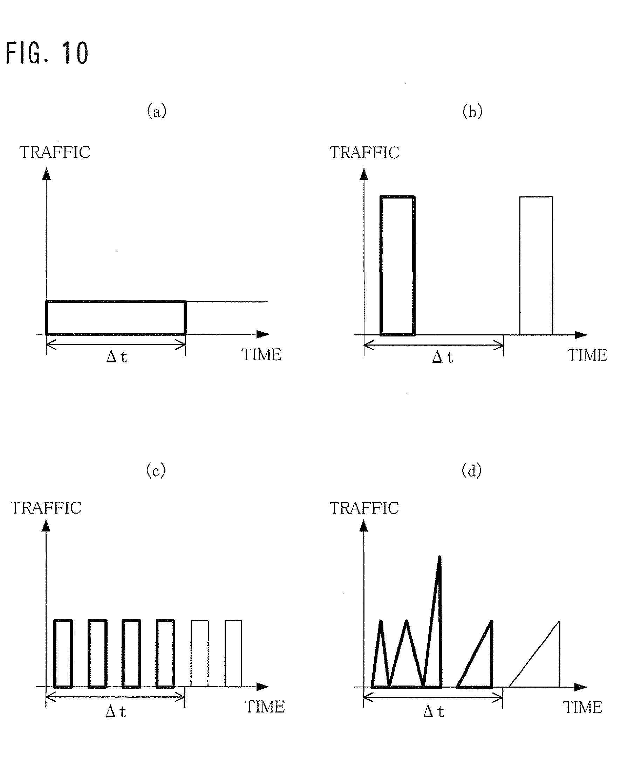

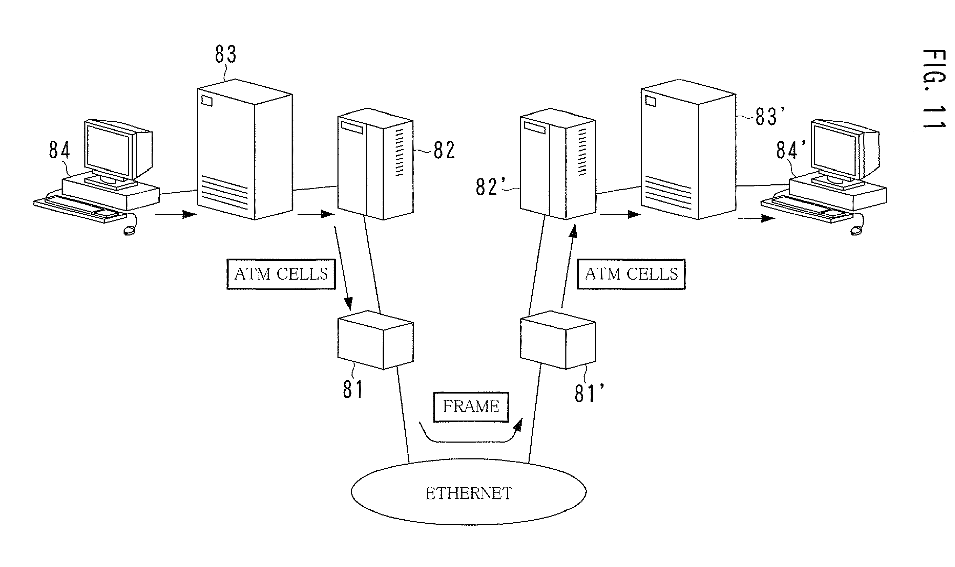

Fig. 9 is a diagram illustrating an example of a conventional WAN 8 using ATM; Fig. 10 is a diagram illustrating examples of traffic fluctuations; and Fig. 11 is a diagram illustrating an example of a WAN using Ethernet.

At present, a network is common in which communication is performed using Asynchronous Transfer Mode (ATM).

In the conventional WAN 8 using the ATM as illustrated in Fig. 9, for example, communication is achieved in the following manner. Data originating from individual terminals 84 is multiplexed by a time-division multiplexer 83 using Time Division Multiplexing (TDM) technology, and the resultant data is transmitted to a CLAD 82. The CLAD 82 divides the data thus transmitted from the time-division multiplexer 83 into a plurality of ATM cells, and transmits the ATM cells to a CLAD 82' at the other end of the communication via an ATM line.

The CLAD 82' assembles the ATM cells into data, and transmits the data to a time-division multiplexer 83'. Then, the time-division multiplexer 83' directs the data to destination terminals 84'. The traffic from the CLAD 82' to the time-division multiplexer 83' is steady.

As illustrated in Fig. 10(a), traffic is steady in TDM communication. In a conventional WAN using the ATM, devices synchronize clocks for communication thereof with each other. Since slight fluctuations in clock or slight fluctuations in traffic are observed in some cases, a buffer is prepared to absorb such fluctuations. However, such fluctuations are small compared to fluctuations in traffic on the Ethernet; therefore a buffer of a device for the ATM is smaller than that of a device for the Ethernet.

Incidentally, reduction in costs necessary to install and manage a WAN is strongly desired. Attention has recently been focused on methods for constructing a WAN by connecting devices to each other using the Ethernet. Such methods allow construction of a WAN at low cost.

If all resources including WAN hardware and WAN software of the operational ATM are replaced with new resources, it takes energy, time, and money. To cope with this, a method for reconstructing a WAN is made possible by utilizing the existing resources, replacing a part of the ATM line with the Ethernet as depicted in Fig. 11, and placing ATM-ETHERNET converters 81 and 81', which are devices to perform conversion from ATM cells to Ethernet frames, and vice versa, between the individual ATM lines and the Ethernet.

Unfortunately, in order to adopt such a method, clocks for communication need to be synchronized with each other in devices placed at both ends of the Ethernet (the ATM-ETHERNET converters 81 and 81' in the example of Fig. 11). In view of this, there is proposed a method for solving this problem as described in Patent Document 1.

According to the method described in Patent Document 1, the following process is performed to transmit data in the form of ATM cells from a first ATM device to a second ATM device. A first connection device is connected in advance to a second connection device via the Ethernet.

The first connection device receives ATM cells from the first ATM device via an ATM interface, converts the ATM cells thus received into a data frame corresponding to a protocol of the Ethernet, transmits the data frame thus converted to the second connection device via the Ethernet, and transmits a control frame corresponding to the protocol of the Ethernet to the second connection device via the Ethernet at regular intervals based on a transmission side clock frequency that is a frequency of a clock for communication of the first ATM device.

The second connection device receives the control frame from the first connection device, receives the data frame from the first connection device, reproduces a clock having the same frequency as the transmission side clock frequency based on a time interval during which the control frame is received, conveys the clock thus reproduced to the second ATM device via an ATM interface, converts the data frame that has been previously received into ATM cells, and transmits the ATM cells thus converted to the second ATM device via the ATM interface.

Further, Patent Document 2 proposes the following method for address resolution upon the connection of ATM networks via the Ethernet.

In a method for controlling communication in a network system in which a plurality of ATM networks are connected to a LAN by individual converters, each of the converters has an address conversion table and a control processing portion.

The converter corresponds to an external VPI/VCI indicating a destination of cells to be transmitted via the ATM network, and broadcasts, to the LAN, a special frame including an internal VPI/VCI uniquely assigned to the LAN and a MAC address of the converter itself.

The converter that has identified the internal VPI/VCI of the special frame and received the special frame transmits, to the LAN, a response frame in which the transmission source MAC address of the special frame is defined as a transmission destination MAC address and a MAC address of the converter itself is defined as a transmission source MAC address.

The converter that has received the response frame associates, as a counterpart MAC address, the external VPI/VCI, the internal VPI/VCI, and the transmission source MAC address of the response frame with one another, and sets the resultant in the address conversion table for registration.
Patent Document 1: Japanese Laid-open Patent Publication No. 2006-148822
Patent Document 2: Japanese Laid-open Patent Publication No. 2006-211457

### DISCLOSURE OF THE INVENTION

As discussed above, on the Ethernet, traffic from one of devices to the other is not steady, and fluctuations in such traffic is large. For example, traffic from the ATM-ETHERNET converter 81 to the ATM-ETHERNET converter 81' depicted in Fig. 11 fluctuates in various forms as illustrated in Figs. 10(b)-10(d) depending on the characteristics or the status of the Ethernet.

An ATM network needs steady traffic; therefore, the ATM-ETHERNET converter 81' is provided with a buffer to reduce fluctuations in traffic on the Ethernet. The buffer serves to store frames received via the Ethernet or store ATM cells encapsulated in the frames.

Storing many frames in the buffer delays communication. In general, however, the ATM-ETHERNET converter 81 sends out data (frames) to the Ethernet steadily, and thus the amount of data received by the ATM-ETHERNET converter 81' per unit of time is stable. Accordingly, storing many frames in the buffer is a temporary phenomenon, which does not cause a constant communication delay.

However, the ATM-ETHERNET converter 81 sometimes sends out a large amount of data to the Ethernet temporarily. Such a situation occurs, for example, when the power of the ATM-ETHERNET converter 81 is turned ON again or the ATM-ETHERNET converter 81 is reset. After the power of the ATM-ETHERNET converter 81 is turned ON again or the ATM-ETHERNET converter 81 is reset, the ATM-ETHERNET converter 81 receives ATM cells steadily from the CLAD 82; however, the ATM-ETHERNET converter 81 cannot process the ATM cells until preparation for address resolution is completed. To cope with this, the ATM-ETHERNET converter 81 accumulates the ATM cells in a buffer thereof. When the preparation for address resolution is completed, the ATM-ETHERNET converter 81 starts a process on the ATM cells thus accumulated.

As discussed earlier, communication beyond the ATM-ETHERNET converter 81' needs steady traffic. The ATM-ETHERNET converter 81, therefore, should keep the amount of frames to be sent to the Ethernet steady. Alternatively, the ATM-ETHERNET converter 81' should keep the amount of ATM cells to be sent to the CLAD 82' steady.

Upon doing so, however, communication is delayed by an amount of the ATM cells that are accumulated in the ATM-ETHERNET converter 81 before the completion of the preparation for address resolution.

The present disclosure is directed to solve the problems pointed out above, and therefore, an object of an embodiment of the present invention is to reduce a delay in communication between two ATM devices via the Ethernet.

A relay device according to one aspect of the present invention is a relay device for relaying ATM cells transmitted from a first ATM device to Ethernet. The relay device includes a receiving section that receives the ATM cells transmitted from the first ATM device, a buffer that stores the ATM cells received by the receiving section, a sending section that encapsulates the ATM cells stored in the buffer in a frame corresponding to the Ethernet and sends the ATM cells to the Ethernet, and a discard control section that starts discarding the ATM cells stored in the buffer at a predetermined time.

Preferably, the predetermined time falls within a period between when the receiving section is ready to receive the ATM cells and immediately after the sending section is ready to send the ATM cells.

Further, the sending section may send the frame in which the ATM cells are encapsulated to a second relay device that serves to connect the Ethernet to a second ATM device that is a destination of the ATM cells. The predetermined time may be immediately after it is detected that the second relay device is changed from a state of being incapable of communication to a state of being ready to perform communication.

Further, the predetermined time may be immediately after receiving a predetermined command entered by an administrator.

The discard control section may finish discarding the ATM cells stored in the buffer after a predetermined amount of time has elapsed.

The relay device may further include an address information storage section that stores address information for address resolution of the ATM cells. The discard control section may start discarding the ATM cells stored in the buffer by invalidating the address information corresponding to the ATM cells directed to the Ethernet and causing the sending section to start sending the ATM cells stored in the buffer.

A relay device according to another aspect of the present invention is a relay device for relaying ATM cells transmitted from a first ATM device to a second ATM device via Ethernet. The relay device includes a receiving section that receives the ATM cells transmitted from the first ATM device, a sending section that encapsulates the ATM cells received by the receiving section in a frame corresponding to the Ethernet and sends the ATM cells to the Ethernet, and a discard control section that causes the receiving section to start discarding the ATM cells received therein during a period between when the receiving section is ready to receive the ATM cells and immediately after the sending section is ready to send the ATM cells.

A relay device according to yet another aspect of the present invention is a relay device for receiving, via Ethernet, a frame in which ATM cells transmitted from a first ATM device are encapsulated and relaying the ATM cells to a second ATM device. The relay device includes a buffer that stores the ATM cells encapsulated in the frame thus received, a transmission section that transmits the ATM cells stored in the buffer to the second ATM device, and a discard control section that starts discarding the ATM cells stored in the buffer at a predetermined time.

Preferably, the predetermined time is immediately after it is detected that the second relay device that has encapsulated the ATM cells stored in the buffer is changed from a state of being incapable of communication to a state of being ready to perform communication.

The relay device may further include a receiving section that receives ATM cells transmitted from the second ATM device, and a sending section that encapsulates the ATM cells received by the receiving section in a frame corresponding to the Ethernet and sends the ATM cells to the Ethernet. The predetermined time may fall within a period between when the receiving section is ready to receive the ATM cells and immediately after the sending section is ready to send the ATM cells.

Furthermore, the discard control section may cause the transmission section to discard the ATM cells obtained from the buffer.

A relay device according to yet another aspect of the present invention is a relay device for receiving, from a different relay device via Ethernet, a frame in which ATM cells transmitted from a first ATM device are encapsulated, and relaying the ATM cells to a second ATM device. The relay device includes a discard control section that discards the frame transmitted from the different relay device until a predetermined amount of time has elapsed since it was detected that the different relay device was changed from a state of being incapable of communication to a state of being ready to perform communication.

### BRIEF DESCRIPTION OF THE DRAWINGS

Fig. 1 is a diagram illustrating an example of the overall configuration of an ATM-ETHERNET-ATM network.
Fig. 2 is a diagram illustrating an example of the configuration of an ATM-ETHERNET converter.
Fig. 3 is a flowchart for explaining an example of the flow of a process for preventing a communication delay after restoration.
Fig. 4 is a diagram for depicting the first method for preventing a communication delay after restoration.
Fig. 5 is a diagram for depicting the second method for preventing a communication delay after restoration.
Fig. 6 is a diagram for depicting the third method for preventing a communication delay after restoration.
Fig. 7 is a diagram illustrating an example of one-to-N communication over ATM networks.
Fig. 8 is a diagram for depicting an example of the case in which the third method is applied to the communication illustrated in Fig. 7.
Fig. 9 is a diagram illustrating an example of a conventional WAN using ATM.
Fig. 10 is a diagram illustrating examples of traffic fluctuations.
Fig. 11 is a diagram illustrating an example of a WAN using Ethernet.

### BEST MODE FOR CARRYING OUT THE INTENTION

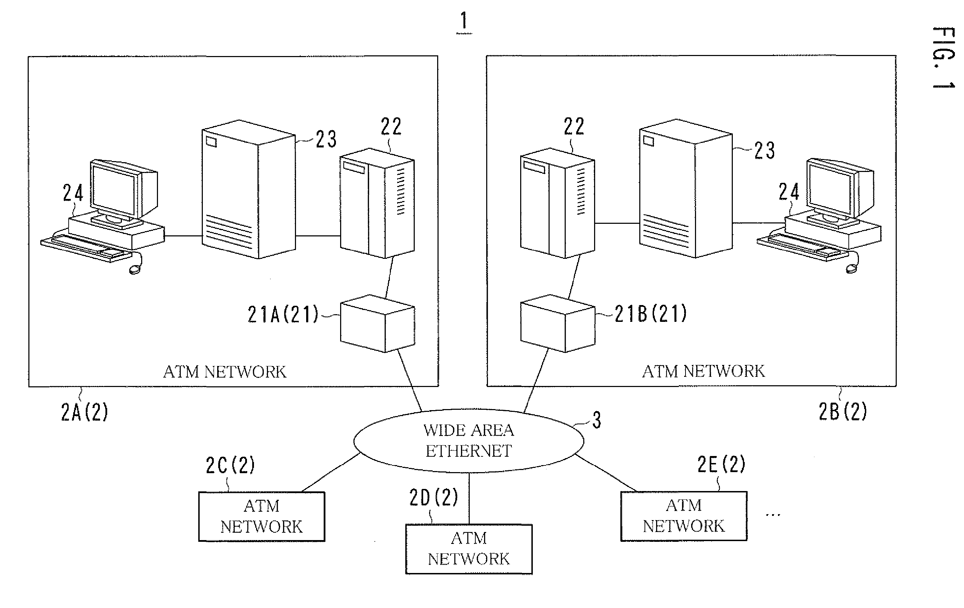

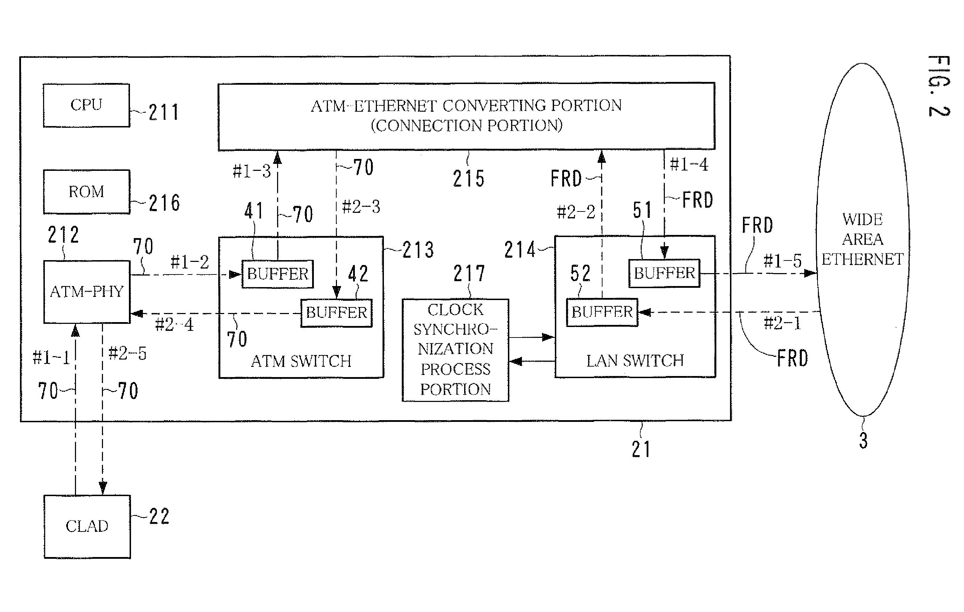

Fig. 1 is a diagram illustrating an example of the overall configuration of an ATM-ETHERNET-ATM network 1; and Fig. 2 is a diagram illustrating an example of the configuration of an ATM-ETHERNET converter 21.

Referring to Fig. 1, the ATM-ETHERNET-ATM network 1 is configured of a plurality of ATM networks 2, a wide area Ethernet 3, and the like. Hereinafter, the ATM networks 2 are sometimes referred to as an "ATM network 2A", an "ATM network 2B", an "ATM network 2C", and so on by way of distinguishing them from one another.

An Ethernet network such as gigabit Ethernet or fast Ethernet is used as the wide area Ethernet 3. A general wide area Ethernet network is also available as the wide area Ethernet 3.

Each of the ATM networks 2 is a network for performing communication using Asynchronous Transfer Mode (ATM) technology, and is configured of the ATM-ETHERNET converter 21, a CLAD 22, a time-division multiplexer 23, a plurality of terminals 24, and the like.

Two of the terminals 24 individually located in the different ATM networks 2 have conventionally performed communication of data such as audio data, image data or facsimile data mainly through an ATM network. In this embodiment, however, the terminals 24 are configured to perform communication mainly through the wide area Ethernet 3 in addition to an ATM network. A personal computer, a telephone set, a printer, a facsimile terminal, or the like is used as each of the terminals 24.

The time-division multiplexer 23 is an ATM switch connected to the terminals 24 in the same ATM network 2 as the time-division multiplexer 23, and multiplexes individual low-speed lines between the time-division multiplexer 23 and the terminals 24 into a single highspeed line for data transmission. The time-division multiplexer 23 is also called a TDM. A time-division multiplexer configured to handle a variety of data such as audio data, image data, or facsimile data is sometimes called a Multi-media TDM (MTDM). An example of the time-division multiplexer 23 is "DMIX" by Fujitsu Limited.

The CLAD 22 disassembles data sent from the time-division multiplexer 23 into ATM cells 70, or reconstitutes data from its constituent ATM cells 70. An example of the CLAD 22 is "EW100" by Fujitsu Limited.

As discussed above, the CLAD 22, the time-division multiplexer 23, and the terminals 24 that have conventionally been used may be used as-is.

The ATM-ETHERNET converter 21 performs communication with an ATM-ETHERNET converter 21 located in a different ATM network 2 via the wide area Ethernet 3. Stated differently, the ATM-ETHERNET converter 21 is a gateway to connect the ATM network 2 in which the ATM-ETHERNET converter 21 itself is located to the different ATM network 2.

Referring to Fig. 2, the ATM-ETHERNET converter 21 is configured of a CPU 211, an ATM-PHY 212, an ATM switch 213, a LAN switch 214, an ATM-ETHERNET converting portion 215, a ROM 216, and a clock synchronization process portion 217, and the like.

The CPU 211 executes firmware (computer program) stored in the ROM 216; thereby to control the ATM-PHY 212, the ATM switch 213, the LAN switch 214, and the ATM-ETHERNET converting portion 215. In short, the CPU 211 totally controls the ATM-ETHERNET converter 21.

The ATM-ETHERNET converting portion 215 encapsulates the ATM cells 70 in a frame corresponding to a protocol of the wide area Ethernet 3, i.e., in an IEEE 802.3 frame, for example. Stated differently, the ATM-ETHERNET converting portion 215 converts the ATM cells 70 into a frame. The word "encapsulate" means generating a frame where the ATM cells 70 are embedded into a predetermined position, e.g., into a USER-DATA portion. It is also sometimes called "encapsulation". Hereinafter, a frame in which the ATM cells 70 are encapsulated is referred to as a "data frame FRD".

Upon the encapsulation, the ATM-ETHERNET converting portion 215 performs address resolution based on well-known methods such as a method discussed in Japanese Laid-open Patent Publication No. 2006-211457. The ATM-ETHERNET converting portion 215 includes tables (an address conversion table and a connection table) for the address resolution.

The ATM-ETHERNET converting portion 215 also extracts the ATM cells 70 from the data frame FRD received from the ATM-ETHERNET converter 21 located in the different ATM network 2. Stated differently, the ATM-ETHERNET converting portion 215 converts the data frame FRD into the ATM cells 70.

The ATM switch 213 performs, for example, switching control of the ATM cells 70. The ATM switch 213 includes buffers 41 and 42. The buffer 41 stores the ATM cells 70 transmitted from the CLAD 22 belonging to the same ATM network 2 as the ATM-ETHERNET converter 21 including the buffer 41 itself. In contrast, the buffer 42 stores the ATM cells 70 transmitted from the different ATM network 2.

The LAN switch 214 performs, for example, a switching process of the data frame FRD. The LAN switch 214 includes buffers 51 and 52. The buffer 51 stores the data frame FRD converted by the ATM-ETHERNET converting portion 215. In contrast, the buffer 52 stores the data frame FRD transmitted from the different ATM network 2.

A single buffer may be used in common as the buffers 41 and 42. Likewise, a single buffer may be used in common as the buffers 51 and 52. Alternatively, a single buffer may be used in common as the buffers 41, 42, 51, and 52. The ATM switch 213, the LAN switch 214, and the ATM-ETHERNET converting portion 215 may be integrally formed with one another.

The ATM-PHY 212 is a Large Scale Integrated Circuit (LSI) having a function of the bottom layer of the ATM network, i.e., a function of a physical layer thereof, and implements Synchronous Digital Hierarchy (SDH) transmission of ATM cells. In other words, the ATM-PHY 212 functions as an ATM interface.

The clock synchronization process portion 217 performs a process for synchronizing a clock for communication of the ATM-ETHERNET converter 21 with a clock for communication of the ATM-ETHERNET converter 21 at the other end of the communication. Such a process can be performed based on well-known methods. An example of such methods is discussed in Japanese Laid-open Patent Publication No. 2006-148822.

### [Communication between the ATM networks 2A and 2B under normal operation]

The following is a description of the details of processes of the ATM-ETHERNET converter 21 through the terminal 24 under normal operation, taking an example of the case in which the terminal 24 located in the ATM network 2A transmits audio to the terminal 24 located in the ATM network 2B, and vice versa.

In the ATM network 2A, the audio to be transmitted is converted into data by the terminal 24, and the data is conveyed to the CLAD 22 via the time-division multiplexer 23. The CLAD 22 converts the data into a plurality of ATM cells 70, and then transmits the ATM cells 70 to the ATM-ETHERNET converter 21.

The ATM-ETHERNET converter 21 of the ATM network 2A performs processes on the ATM cells 70 transmitted from the CLAD 22 in the order indicated by dot-dash lines of Fig. 2.

In the ATM-ETHERNET converter 21 of the ATM network 2A, when the ATM cells 70 are received from the CLAD 22 (#1-1), the ATM-PHY 212 sends the ATM cells 70 to the ATM switch 213 (#1-2).

The ATM switch 213 causes the buffer 41 to temporarily store the ATM cells 70 sent from the ATM switch 213. After that, the ATM switch 213 sends the ATM cells 70 to the ATM-ETHERNET converting portion 215 according to the First-In First-Out (FIFO) method (#1-3).

The ATM-ETHERNET converting portion 215 converts the ATM cells 70 thus sent into a data frame FRD through encapsulation of the ATM cells 70. Then, the ATM-ETHERNET converting portion 215 sends the data frame FRD to the LAN switch 214 (#1-4).

When the data frame FRD is received from the ATM-ETHERNET converting portion 215, the LAN switch 214 causes the buffer 51 to temporarily store the data frame FRD therein. After that, the LAN switch 214 sends out the data frame FRD to the wide area Ethernet 3 according to the First-In First-Out (FIFO) method (#1-5).

The data frame FRD thus sent out is conveyed to the ATM-ETHERNET converter 21 of the ATM network 2B via various nodes in the wide area Ethernet 3.

The ATM-ETHERNET converter 21 of the ATM network 2B performs processes on the data frame FRD in the order indicated by dotted lines of Fig. 2.

In the ATM-ETHERNET converter 21 of the ATM network 2B, when receiving the data frame FRD, the LAN switch 214 causes the buffer 52 to temporarily store the data frame FRD therein. Then, the LAN switch 214 sends the data frame FRD to the ATM-ETHERNET converting portion 215 according to the First-In First-out method (#2-1).

The ATM-ETHERNET converting portion 215 extracts the ATM cells 70 from the data frame FRD. Stated differently, the ATM-ETHERNET converting portion 215 converts the data frame FRD into the ATM cells 70. After the conversion, the ATM-ETHERNET converting portion 215 sends the ATM cells 70 to the ATM switch 213 (#2-3).

The ATM switch 213 causes the buffer 42 to temporarily store the ATM cells 70 sent from the ATM-ETHERNET converting portion 215. Then, the ATM switch 213 sends the ATM cells 70 to the ATM-PHY 212 according to the First-In First-Out (FIFO) method (#2-4).

The ATM-PHY 212 transmits the ATM cells 70 to the CLAD 22 (#2-5). The CLAD 22 reconstitutes predetermined format data from the ATM cells 70 and other ATM cells 70, and conveys the resultant to a destination terminal 24 via the time-division multiplexer 23.

### [First method for preventing a communication delay after restoration]

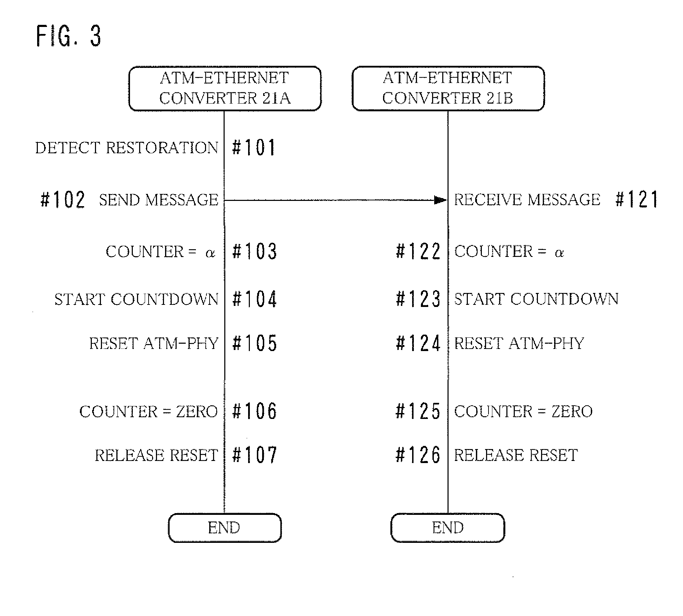

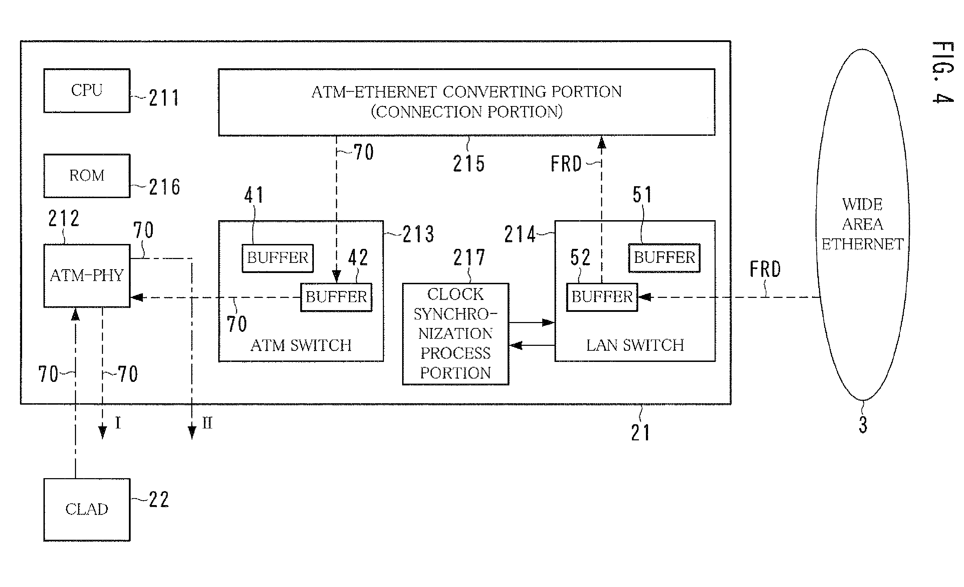

Fig. 3 is a flowchart for explaining an example of the flow of a process for preventing a communication delay after restoration; and Fig. 4 is a diagram for depicting the first method for preventing a communication delay after restoration.

The following is a description of processes of the individual ATM-ETHERNET converters 21 of the ATM networks 2A and 2B when a failure has occurred in communication between the ATM networks 2A and 2B and thereafter the communication therebetween is restored. Hereinafter, the ATM-ETHERNET converters 21 of the ATM networks 2A and 2B are referred to as an "ATM-ETHERNET converter 21A" and an "ATM-ETHERNET converter 21B" respectively by way of distinguishing them from each other.

Suppose that the cause of the failure of communication between the ATM networks 2A and 23B is in the ATM-ETHERNET converter 21B, and the cause of the failure is removed therefrom. Then, further suppose that the power of the ATM-ETHERNET converter 21B is turned ON again or the ATM-ETHERNET converter 21B is reset.

The terminal 24 located in the ATM network 2B continues to transmit data regardless of the occurrence of an event such as that the power of the ATM-ETHERNET converter 21B is turned ON again or the ATM-ETHERNET converter 21B is rest. The data is disassembled into a plurality of ATM cells 70 by the CLAD 22 as discussed above. Then, the ATM cells 70 are inputted to the ATM-ETHERNET converter 21B and are temporarily stored in the buffer 41.

As described earlier in "DISCLOSURE OF THE INVENTION", the ATM-ETHERNET converter 21B cannot immediately resume establishing the connection. This allows many ATM cells 70 to be accumulated in the buffer 41. Alternatively, this allows data frames FRD converted by the ATM-ETHERNET converting portion 215 to be accumulated in the buffer 51. If, after resuming the connection, such ATM cells 70 or such data frames FRD thus accumulated flow concurrently, the ATM cells 70 are suddenly accumulated in the buffer 42 of the other end of the connection, i.e., in the buffer 42 of the ATM-ETHERNET converter 21A. Thereafter, a status in which the ATM cells 70 are accumulated continues, thereby leading to the occurrence of a communication delay.

To cope with this, the ATM-ETHERNET converters 21A and 21B prevent such a communication delay by performing a process according to the steps illustrated in Fig. 3.

When detecting that the cause of the failure is removed and the connection is established (#101), the ATM-ETHERNET converter 21B sends a predetermined message to the ATM-ETHERNET converter 21A (#102).

The ATM-ETHERNET converter 21B immediately sets a timer to time Ta, e.g., five seconds (#103), starts a countdown, and further resets the ATM-PHY 212 thereof (#104 and #105). The ATM-ETHERNET converter 21B keeps the reset status until the timer reaches "zero seconds".

Thereby, as indicated by Roman numeral I of Fig. 4, the ATM cells 70 corresponding to data transmitted from the terminal 24 located in the ATM network 2B are discarded without being stored in the buffer 41 of the ATM-ETHERNET converter 21B during a period from the start of the countdown to the indication of "zero seconds" by the timer. Further, as indicated by Roman numeral II of Fig. 4, the ATM cells 70 corresponding to data transmitted from the terminal 24 located in the ATM network 2A are discarded from the buffer 42 of the ATM-ETHERNET converter 21B itself.

On the other hand, when receiving the predetermined message from the ATM-ETHERNET converter 21B (#121), the ATM-ETHERNET converter 21A immediately performs the same process as the ATM-ETHERNET converter 21B. To be specific, the ATM-ETHERNET converter 21A sets a timer to time Ta, (#122), starts a countdown, and further resets the ATM-PHY 212 thereof (#123 and #124). The ATM-ETHERNET converter 21A keeps the reset status until the timer reaches "zero seconds".

Thereby, as indicated by Roman numeral I of Fig. 4, the ATM cells 70 corresponding to data transmitted from the terminal 24 located in the ATM network 2A are discarded without being stored in the buffer 41 of the ATM-ETHERNET converter 21A during a period from the start of the countdown to the indication of "zero seconds" by the timer. Further, as indicated by Roman numeral II of Fig. 4, the ATM cells 70 corresponding to data transmitted from the terminal 24 located in the ATM network 2B may be discarded from the buffer 42 of the ATM-ETHERNET converter 21A itself.

When both the timers reach "zero seconds" (#106 and #125), the ATM-ETHERNET converters 21A and 21B release the individual reset statuses (#107 and #126). Thereafter, normal communication is resumed as described earlier with reference to Fig. 2.

Further, also in the case where a communication cable is reconnected or a device is replaced with another device, a process similar to that described above is performed to prevent a communication delay.

It is preferable that both the ATM-ETHERNET converters 21A and 21B perform the process for discarding data stored in the buffers in order to ensure prevention of a communication delay. Instead, however, any one of the ATM-ETHERNET converters 21A and 21B may perform the discard process to prevent a communication delay.

Note that the time Ta may be determined depending on various conditions such as the capacity, i.e., the depth, of the buffer 41, 42, 51, or 52, or a communication rate between the ATM-ETHERNET converters 21A and 21B. Alternatively, an experiment is conducted to obtain the minimum number of seconds that are necessary to reduce a communication delay to a certain level or less. Then, the minimum number of seconds thus obtained may be used as the value of the time Ta.

### [Second method for preventing a communication delay after restoration]

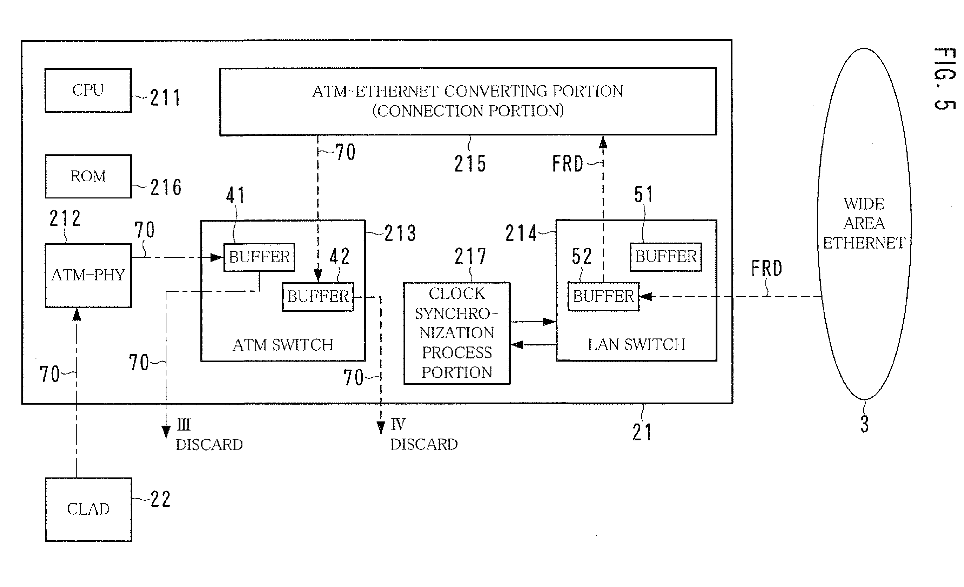

Fig. 5 is a diagram for depicting the second method for preventing a communication delay after restoration.

The first method prevents, by resetting the ATM-PHY 212, a communication delay due to the accumulation of the ATM cells 70 into buffers upon restoration (refer to Fig. 4). Instead, such a communication delay may be prevented by the second method in which the discard process is performed in the ATM switch 213.

To be specific, as described earlier with reference to Fig. 3, the first method involves continuing to discard the ATM cells 70 fed to the individual ATM-PHYs 212 by the ATM-ETHERNET converters 21A and 21B during a period of time Ta (#104-#106, and #123-#125) at a time when a predetermined message is notified (#102 and #121). On the other hand, as illustrated in Fig. 5, the second method involves continuing to discard (Roman numerals III and IV) the ATM cells 70 stored in the buffers 41 and 42 of the ATM switches 213 by the ATM-ETHERNET converters 21A and 21B during a period of time Ta. The discard process may be performed by either one or both of the ATM switches 213 of the ATM-ETHERNET converters 21A and 21B, similarly to the case of the first method.

### [Third method for preventing a communication delay after restoration]

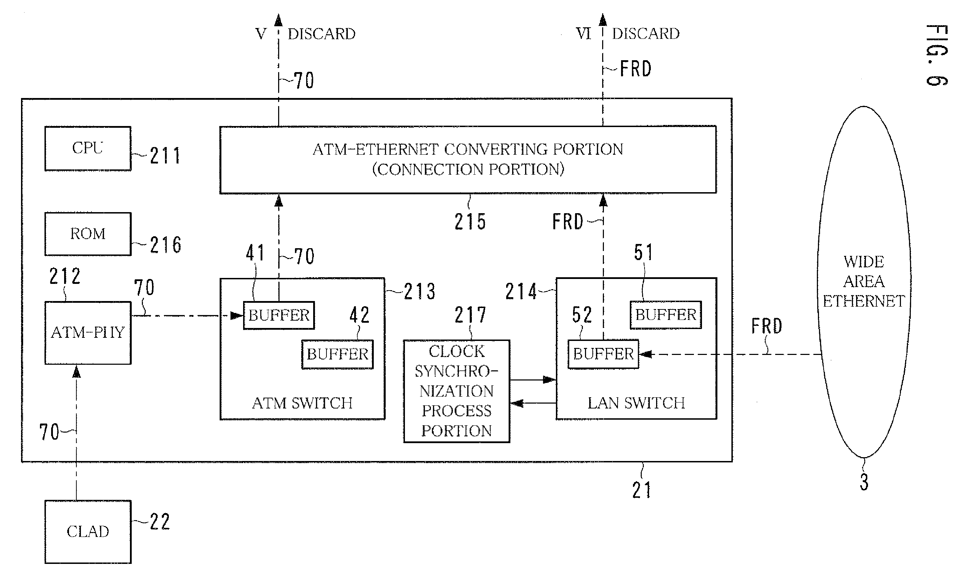

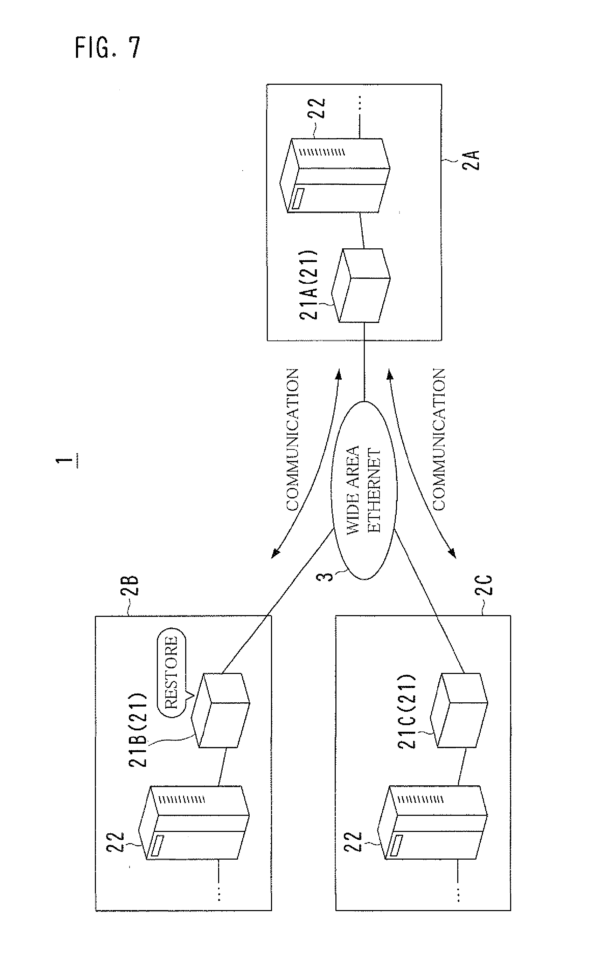

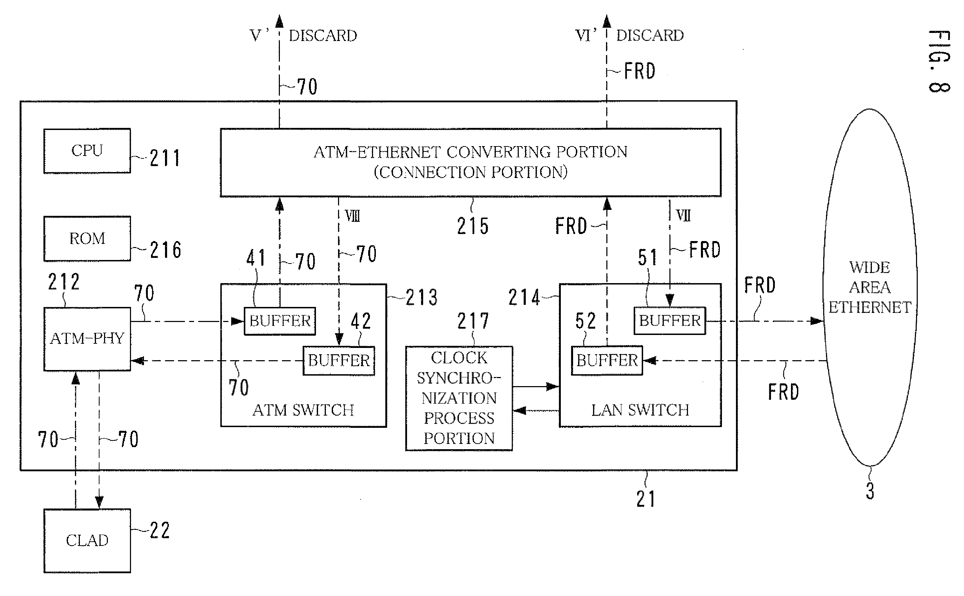

Fig. 6 is a diagram for depicting the third method for preventing a communication delay after restoration; Fig. 7 is a diagram illustrating an example of one-to-N communication over the ATM networks 2; and Fig. 8 is a diagram for depicting an example of the case in which the third method is applied to the communication illustrated in Fig. 7.

A communication delay due to the accumulation of the ATM cells 70 into buffers upon restoration may be prevented by the third method discussed below.

As illustrated in Fig. 6, according to the third method, during a period of time Ta described earlier with reference to Fig. 3 (#104-#106, and #123-#125), the ATM switch 213 of the ATM-ETHERNET converter 21A continues to discard the ATM cells 70 transmitted from the terminal 24 of the ATM network 2A to the terminal 24 of the ATM network 2B (Roman numeral V), and also continues to discard the data frames FRD transmitted from the ATM network 2B to the terminal 24 of the ATM network 2A (Roman numeral VI). Likewise, the ATM switch 213 of the ATM-ETHERNET converter 21B continues to discard the ATM cells 70 transmitted from the terminal 24 of the ATM network 2B to the terminal 24 of the ATM network 2A (Roman numeral V), and continues to discard the data frames FRD transmitted from the ATM network 2A to the terminal 24 of the ATM network 2B (Roman numeral VI).

As with the cases of the first and second methods, the process based on the third method may be performed by either one or both of the ATM-ETHERNET converting portions 215 of the ATM-ETHERNET converters 21A and 21B.

The ATM-ETHERNET converting portion 215 of the ATM-ETHERNET converter 21A discards the ATM cells 70 and the data frames FRD in the following manner. For example, information for address resolution of the ATM cells 70 to be transmitted to the ATM-ETHERNET converter 21B and information for address resolution of the data frames FRD transmitted from the ATM-ETHERNET converter 21B may be deleted from or invalidated in the address conversion table, which in turn makes such information unavailable. Alternatively, the ATM cells 70 and the data frames FRD may be discarded by invalidating information of association (path) between the terminal 24 of the ATM network 2B and the gateway of the ATM network 2B, i.e., the ATM-ETHERNET converter 21B. This enables the ATM-ETHERNET converting portion 215 of the ATM-ETHERNET converter 21A to delete, as destination unknown cells, the ATM cells 70 sent from the ATM switch 213, and to delete, as transmission source unknown frames, the data frames FRD sent from the LAN switch 214. The ATM cells 70 and the data frames FRD in the ATM-ETHERNET converting portion 215 of the ATM-ETHERNET converter 21B are discarded by a method similar to that described above.

The third method is useful for the case in which one-to-N communication is performed between the ATM networks 2. Referring to Fig. 7, for example, the following case is discussed: The ATM network 2A performs communication with each of the ATM networks 2B and 2C. A failure occurs in the ATM network 2B, and so only the communication between the ATM networks 2A and 2B fails. Thereafter, because the cause of the failure is removed, the communication between the ATM networks 2A and 2B is restored. Note that no communication between the ATM networks 2B and 2C is performed.

In the ATM network 2C, a process for preventing a communication delay due to the accumulation of the ATM cells 70 into the buffers is unnecessary. The ATM-ETHERNET converters 21A and 21B need to perform a process for preventing a communication delay by using any one of the first through third methods.

The first method involves discarding all the ATM cells 70 passing through the ATM-PHY 212 of the ATM-ETHERNET converter 21A. Accordingly, the first method is effective in preventing a communication delay between the ATM networks 2A and 2B. The first method, however, causes a loss in the communication between the ATM networks 2A and 2C that keeps a normal status. The same applies to the second method because the second method also involves discarding all the ATM cells 70 stored in the ATM switch 213 of the ATM-ETHERNET converter 21A.

The third method, however, as illustrated in Fig. 8, involves discarding the ATM cells 70 and the data frames FRD only corresponding to the communication between the ATM networks 2A and 2B (Roman numerals V' and VI'), and conveying the ATM cells 70 and the data frames FRD corresponding to the communication between the ATM networks 2A and 2C (Roman numerals VII and VIII). Accordingly, the third method makes it possible to prevent a communication delay between the ATM networks 2A and 2B without causing a loss in the communication between the ATM networks 2A and 2C.

### [Modification to synchronization of the process for preventing a communication delay]

According to the examples discussed above, the ATM-ETHERNET converter 21B sends a predetermined message to the ATM-ETHERNET converter 21A in order to cause the ATM-ETHERNET converters 21A and 21B to perform a process for preventing a communication delay at the same timing. Instead, however, different methods may be adopted to achieve synchronization.

Such synchronization may be achieved by using, for example, a method described in Japanese Laid-open Patent Publication No. 2005-362081. To be specific, the ATM-ETHERNET converters 21A and 21B regularly transmit a request frame to each other. When receiving the request frame, the ATM-ETHERNET converters 21A and 21B transmit a response frame to the other party. If the ATM-ETHERNET converters 21A and 21B receive a response frame from the other party, then the ATM-ETHERNET converters 21A and 21B recognize that communication with the other party is normally performed. If the ATM-ETHERNET converters 21A and 21B do not receive a response frame from the other party, then the ATM-ETHERNET converters 21A and 21B recognize that a failure occurs. This process is continuously performed even after the failure occurs.

When the communication fails temporarily and after that the ATM-ETHERNET converters 21A and 21B recognize again that communication with the other party is normally performed, the ATM-ETHERNET converters 21A and 21B start a process for preventing a communication delay.

Another configuration is possible in which a process for preventing a communication delay is performed forcedly, that is, performed regardless of whether communication can be performed or not, in response to an administrator's operation of a personal computer to enter a predetermined command.

For example, when a predetermined command is inputted from a personal computer connected to the ATM-ETHERNET converter 21A, the ATM-ETHERNET converting portion 215 of the ATM-ETHERNET converter 21A transfers the command to the ATM-ETHERNET converter 21B. Then, the ATM-ETHERNET converting portion 215 of the ATM-ETHERNET converter 21A performs a process for preventing a communication delay. Upon receipt of the command, the ATM-ETHERNET converting portion 215 of the ATM-ETHERNET converter 21A performs a process for preventing a communication delay.

Performing a process for preventing a communication delay at a time when a command is entered is effective in the case where a malfunction occurs due to a difficult cause to identify such as a failure in the wide area Ethernet 3. Performing such a process is also effective in the case where a malfunction report is sent from a user.

This embodiment makes it possible to reduce a delay in communication between a plurality of the ATM-ETHERNET converters 21 via the wide area Ethernet 3.

The wide area Ethernet 3 is used as the Ethernet connecting the ATM networks 2 together in this embodiment. Instead, however, a LAN may be used as the Ethernet connecting the ATM networks 2 together.

The process for preventing a communication delay may be performed at a time other than a time when the power is turned ON again, when reset is made, or when a predetermined command is received. Such a process may be performed, for example, at a time when a communication cable is disconnected from the ATM-ETHERNET converter 21, and then is connected again thereto.

In this embodiment, as illustrated in Fig. 3, the process for preventing a communication delay starts at a time when the ATM-ETHERNET converter 21 in which a failure has occurred is ready to transmit the data frames FRD to the wide area Ethernet 3. Instead, such a process may be performed at a timing earlier than that timing. For example, such a process may start at a time when the power is supplied to the ATM-ETHERNET converter 21, reset is made, or a communication cable is connected thereto. A timing to start such a process may be optionally determined during the period of time between when the power is turned ON, when reset is made, or when a communication cable is connected and immediately after the transmission of the data frames FRD to the wide area Ethernet 3 becomes possible.

In the embodiments discussed above, the overall configuration of the ATM-ETHERNET-ATM network 1, the ATM network 2, and the ATM-ETHERNET converter 21, the configurations of various portions thereof, the content to be processed, the processing order, and the like may be altered as required in accordance with the subject matter of the present invention.

### INDUSTRIAL APPLICABILITY

This invention is suitably used in the case where a WAN is reconstructed by using the existing resources of an ATM network and a low-cost Ethernet.

## Claims

1. A relay device for relaying ATM cells transmitted from a first ATM device to Ethernet, the relay device comprising:
a receiving section that receives the ATM cells transmitted from the first ATM device;
a buffer that stores the ATM cells received by the receiving section;
a sending section that encapsulates the ATM cells stored in the buffer in a frame corresponding to the Ethernet and sends the ATM cells to the Ethernet; and
a discard control section that starts discarding the ATM cells stored in the buffer at a predetermined time.

2. The relay device according to claim 1, wherein the predetermined time falls within a period between when the receiving section is ready to receive the ATM cells and immediately after the sending section is ready to send the ATM cells.

3. The relay device according to claim 1, wherein the sending section sends the frame in which the ATM cells are encapsulated to a second relay device, the second relay device connecting the Ethernet to a second ATM device that is a destination of the ATM cells, and
the predetermined time is immediately after it is detected that the second relay device is changed from a state of being incapable of communication to a state of being ready to perform communication.

4. The relay device according to claim 1, wherein the predetermined time is immediately after receiving a predetermined command entered by an administrator.

5. The relay device according to any one of claims 1 through 4, wherein the discard control section finishes discarding the ATM cells stored in the buffer after a predetermined amount of time has elapsed.

6. The relay device according to any one of claims 1 through 5, further comprising
an address information storage section that stores address information for address resolution of the ATM cells,
wherein the discard control section starts discarding the ATM cells stored in the buffer by invalidating the address information corresponding to the ATM cells directed to the Ethernet and causing the sending section to start sending the ATM cells stored in the buffer.

7. A relay device for relaying ATM cells transmitted from a first ATM device to a second ATM device via Ethernet, the relay device comprising:
a receiving section that receives the ATM cells transmitted from the first ATM device;
a sending section that encapsulates the ATM cells received by the receiving section in a frame corresponding to the Ethernet and sends the ATM cells to the Ethernet; and
a discard control section that causes the receiving section to start discarding the ATM cells received therein during a period between when the receiving section is ready to receive the ATM cells and immediately after the sending section is ready to send the ATM cells.

8. A relay device for receiving, via Ethernet, a frame in which ATM cells transmitted from a first ATM device are encapsulated and relaying the ATM cells to a second ATM device, the relay device comprising:
a buffer that stores the ATM cells encapsulated in the frame thus received;
a transmission section that transmits the ATM cells stored in the buffer to the second ATM device; and
a discard control section that starts discarding the ATM cells stored in the buffer at a predetermined time.

9. The relay device according to claim 8, wherein the predetermined time is immediately after it is detected that the second relay device that has encapsulated the ATM cells stored in the buffer is changed from a state of being incapable of communication to a state of being ready to perform communication.

10. The relay device according to claim 8, further comprising
a receiving section that receives ATM cells transmitted from the second ATM device, and
a sending section that encapsulates the ATM cells received by the receiving section in a frame corresponding to the Ethernet and sends the ATM cells to the Ethernet,
wherein the predetermined time falls within a period between when the receiving section is ready to receive the ATM cells and immediately after the sending section is ready to send the ATM cells.

11. The relay device according to claim 8, wherein the predetermined time is immediately after receiving a predetermined command entered by an administrator.

12. The relay device according to any one of claims 8 through 11, wherein the discard control section finishes discarding the ATM cells stored in the buffer after a predetermined amount of time has elapsed.

13. The relay device according to any one of claims 8 through 12, wherein the discard control section causes the transmission section to discard the ATM cells obtained from the buffer.

14. A relay device for receiving, from a different relay device via Ethernet, a frame in which ATM cells transmitted from a first ATM device are encapsulated, and relaying the ATM cells to a second ATM device, the relay device comprising:
a discard control section that discards the frame transmitted from the different relay device until a predetermined amount of time has elapsed since it was detected that the different relay device was changed from a state of being incapable of communication to a state of being ready to perform communication.

15. A method for controlling a relay device for relaying ATM cells transmitted from a first ATM device to a second ATM device via Ethernet, the method comprising:
causing the relay device to perform
receiving the ATM cells transmitted from the first ATM device,
storing, in a buffer, the ATM cells thus received,
encapsulating the ATM cells stored in the buffer in a frame corresponding to the Ethernet and sending the ATM cells to the Ethernet, and
starting discarding the ATM cells stored in the buffer at a predetermined time.

16. A method for controlling a relay device for relaying ATM cells transmitted from a first ATM device to a second ATM device via Ethernet, the method comprising:
causing the relay device to perform
receiving the ATM cells transmitted from the first ATM device,
encapsulating the ATM cells thus received in a frame corresponding to the Ethernet and sending the ATM cells to the Ethernet, and
starting discarding the ATM cells received by the relay device during a period between when the relay device is ready to receive the ATM cells and immediately after the relay device is ready to send the ATM cells.

17. A method for controlling a relay device for receiving, via Ethernet, a frame in which ATM cells transmitted from a first ATM device are encapsulated and relaying the ATM cells to a second ATM device, the method comprising:
storing, in a buffer, the ATM cells encapsulated in the frame thus received;
transmitting the ATM cells stored in the buffer to the second ATM device; and
starting discarding the ATM cells stored in the buffer at a predetermined time.

18. A method for controlling a relay device for receiving, from a different relay device via Ethernet, a frame in which ATM cells transmitted from a first ATM device are encapsulated, and relaying the ATM cells to a second ATM device, the method comprising:
causing the relay device to discard the frame transmitted from the different relay device until a predetermined amount of time has elapsed since it was detected that the different relay device was changed from a state of being incapable of communication to a state of being ready to perform communication.

19. A system for supporting communication between ATM devices to transmit, using ATM cells, data from a first ATM device to a second ATM device, the system comprising:
a first relay device and a second relay device that are configured to connect to each other via Ethernet,
the first relay device including
an ATM cell receiving section that receives the ATM cells from the first ATM device via an ATM interface,
a first buffer that stores the ATM cells received by the ATM cell receiving section,
a first conversion section that converts the ATM cells stored in the first buffer into a frame corresponding to a protocol of the Ethernet,
a frame transmission section that transmits the frame obtained as a result of conversion by the first conversion section to the second relay device via the Ethernet, and
a first discard control section that starts discarding the ATM cells stored in the first buffer during a period between when the ATM cell receiving section is ready to receive the ATM cells and immediately after the frame transmission section is ready to transmit the ATM cells, and
the second relay device including
a frame receiving section that receives the frame from the first relay device,
a second conversion section that converts the frame received by the frame receiving section into the ATM cells,
a second buffer that stores the ATM cells obtained as a result of conversion by the second conversion section,
an ATM cell transmission section that transmits the ATM cells stored in the second buffer to the second ATM device via an ATM interface, and
a second discard control section that starts discarding the ATM cells stored in the second buffer in synchronism with the second discard control section .

20. The system according to claim 19, wherein
the first relay section further includes a notification section that transmits, to the second relay device, a message indicating that the frame transmission section is ready to transmit the ATM cells, and
upon receiving the message, the second discard control section starts discarding the ATM cells stored in the second buffer.

21. The system according to claim 19, wherein
the second relay section further includes a detection section that detects that the frame transmission section is ready to transmit the ATM cells, and
the second discard control section starts discarding the ATM cells stored in the second buffer when it is detected that the frame transmission section is ready to transmit the ATM cells.

22. The system according to claim 19, wherein
when a predetermined command is received, the first discard control section starts discarding the ATM cells stored in the first buffer regardless of whether or not the frame transmission section is ready to transmit the ATM cells, and
when the predetermined command is received, the second discard control section starts discarding the ATM cells stored in the second buffer.

23. A computer-readable storage medium storing thereon a computer program for controlling a relay device for relaying ATM cells transmitted from a first ATM device to a second ATM device via Ethernet, the computer program causing the relay device to perform:
receiving the ATM cells transmitted from the first ATM device;
storing, in a buffer, the ATM cells thus received;
encapsulating the ATM cells stored in the buffer in a frame corresponding to the Ethernet and sending the ATM cells to the Ethernet; and
starting discarding the ATM cells stored in the buffer at a predetermined time.

24. A computer-readable storage medium storing thereon a computer program for controlling a relay device for relaying ATM cells transmitted from a first ATM device to a second ATM device via Ethernet, the computer program causing the relay device to perform:
receiving the ATM cells transmitted from the first ATM device;
encapsulating the ATM cells thus received in a frame corresponding to the Ethernet and sending the ATM cells to the Ethernet; and
starting discarding the ATM cells received by the relay device during a period between when the relay device is ready to receive the ATM cells and immediately after the relay device is ready to send the ATM cells.

25. A computer-readable storage medium storing thereon a computer program for controlling a relay device for receiving, via Ethernet, a frame in which ATM cells transmitted from a first ATM device are encapsulated and relaying the ATM cells to a second ATM device, the computer program causing the relay device to perform:
storing, in a buffer, the ATM cells encapsulated in the frame thus received;
transmitting the ATM cells stored in the buffer to the second ATM device; and
starting discarding the ATM cells stored in the buffer at a predetermined time.

26. A computer-readable storage medium storing thereon a computer program for controlling a relay device for receiving, from a different relay device via Ethernet, a frame in which ATM cells transmitted from a first ATM device are encapsulated, and relaying the ATM cells to a second ATM device, the computer program causing the relay device to perform:
discarding the frame transmitted from the different relay device until a predetermined amount of time has elapsed since it was detected that the different relay device was changed from a state of being incapable of communication to a state of being ready to perform communication.
